Europäisches Patentamt

European Patent Office

Office européen des brevets

(11) Veröffentlichungsnummer : **0 078 029 B1**

# EUROPÄISCHE PATENTSCHRIFT

(45) Veröffentlichungstag der Patentschrift :
26.03.86

(51) Int. Cl.⁴ : **G 02 B   6/32**

(21) Anmeldenummer : **82109752.4**

(22) Anmeldetag : **22.10.82**

(54) **Steckverbindung für Lichtwellenleiter.**

(30) Priorität : **22.10.81 DE 3141904**

(43) Veröffentlichungstag der Anmeldung :
**04.05.83 Patentblatt 83/18**

(45) Bekanntmachung des Hinweises auf die Patenterteilung : **26.03.86 Patentblatt 86/13**

(84) Benannte Vertragsstaaten :
**AT DE FR GB IT NL**

(56) Entgegenhaltungen :
**EP-A- 0 053 914
DE-A- 2 906 104
DE-U- 7 935 570
US-A- 4 290 667**

(73) Patentinhaber : **Felten & Guilleaume Fernmeldeanlagen GmbH
Thurn-und-Taxis-Strasse 10 Postfach 4943
D-8500 Nürnberg 10 (DE)**

(72) Erfinder : **Mannschke, Lothar Paul, Dipl.-Ing.
Am Haidbuckel 23 .
D-8501 Eckental (DE)**

(74) Vertreter : **Peuckert, Hermann
Philips Patentverwaltung GmbH Billstrasse 80 Postfach 10 51 49
D-2000 Hamburg 28 (DE)**

## Beschreibung

Die Erfindung betrifft eine Steckverbindung für Lichtwellenleiter, bei der ein Lichtwellenleiter mit aufgesetzter Gradienten-Stablinse in einem Rohr zentral befestigt ist, wobei Haltemittel vorgesehen sind, um die Stablinse mit einer anderen Stablinse axial ausgerichtet in einem Steckergehäuse zu verbinden. Mit solchen Steckverbindern für die optische Nachrichtenübertragung können brauchbare Lichtübergangsstellen geschaffen werden.

Bei einer aus DE-A1-29 06 104 bekannten Vorrichtung zum Koppeln zweier Lichtwellenleiter werden als Haltemittel Rohre verwendet, in denen Gradienten-Stablinsen gehalten sind und in denen das freie Ende von aneinander anzukoppelnden Lichtwellenleitern zentral an den Gradienten-Stablinsen festgelegt ist. Das anzukoppelnde Lichtwellenleiterende ist dabei durch ein Kunststoffteil geführt, welches durch Verformung eine Zentrierung des Lichtwellenleiters auf der Gradienten-Stablinse bewirkt. Zur Einführung des Lichtwellenleiters besitzt das Kunststoffteil zentrisch eine abgestufte Bohrung, deren Durchmesser größer ist als der Außendurchmesser des Lichtwellenleiters. Der Übergang vom Bohrungsteil mit dem größeren Durchmesser zum Bohrungsteil mit dem kleineren Durchmesser verläuft konisch.

Der Erfindung liegt die Aufgabe zugrunde, in einer Steckverbindung für Lichtwellenleiter die zu Fehlern führenden Toleranzen der Glasfaser selbst (Kern/Mantel) und der Montagetoleranzen (Glasfaser/Rohr) ohne hohe Anforderungen an die Haltemittel möglichst auszuschalten sowie die Faser am Haltemittel zugentlastet zu befestigen und das Haltemittel so zu gestalten, daß es z. B. in dem aus dem Deutschen Gebrauchsmuster 79 35 570 bekannten Steckverbinder sowie alternativ auch in einem konfokalen faseroptischen System einsetzbar ist.

Diese Aufgabe wird bei einer Steckverbindung der eingangs genannten Art dadurch gelöst, daß die Gradienten-Stablinse am Lichtaustrittsende einen größeren Durchmesser aufweist als das Rohr und so weit aus diesem hervorragt, daß sie selbst als Haltemittel dient.

Der Erfindung liegt die Erkenntnis zugrunde, daß die Gradienten-Stablinse (in der Literatur auch abgekürzt « GRIN »-Linse bezeichnet) mechanische Führungsaufgaben übernehmen kann. Dadurch entfallen Übertragungsverluste als Folge von Fertigungstoleranzen eines nicht mehr benötigten, bisher zwischengeschalteten Führungsmittels. Außerdem können die an sich bei der eingangs genannten Vorrichtung zum Koppeln von Lichtwellenleitern bekannten Vorteile beim Ausrichten der Lichtwellenleiter zum Zuge kommen. Der Lichtwellenleiter ist an der Gradienten-Stablinse innerhalb der Verlängerung zuverlässig geschützt. Der Schutz ist ohne Einfluß auf die Führung der Haltemittel ; denn die optische Ausrichtung beruht allein auf der Ausrichtung der beiden Gradienten-Stablinsen aufeinander. Die Zugentlastung ist hierdurch ebenfalls gewährleistet.

Bei einer besonders vorteilhaften Ausgestaltung der Erfindung ist die rohrförmige Verlängerung auf eine ringförmige Aussparung der Gradienten-Stablinse aufgesetzt.

Weitere in den Unteransprüchen angegebene vorteilhafte Ausgestaltungen der Erfindung werden anhand der in der Zeichnung schematisch dargestellten Ausführungsbeispiele näher erläutert. Es zeigen :

Figur 1 in dreidimensionaler Ansicht eine Steckerhälfte mit eingespannter Gradienten-Stablinse,

Figur 2 im Schnitt eine andere Version einer mit einer Verlängerung bestückten Gradienten-Stablinse,

Figur 3 und 4 im Schnitt Einzelheiten für die Gradienten-Stablinse.

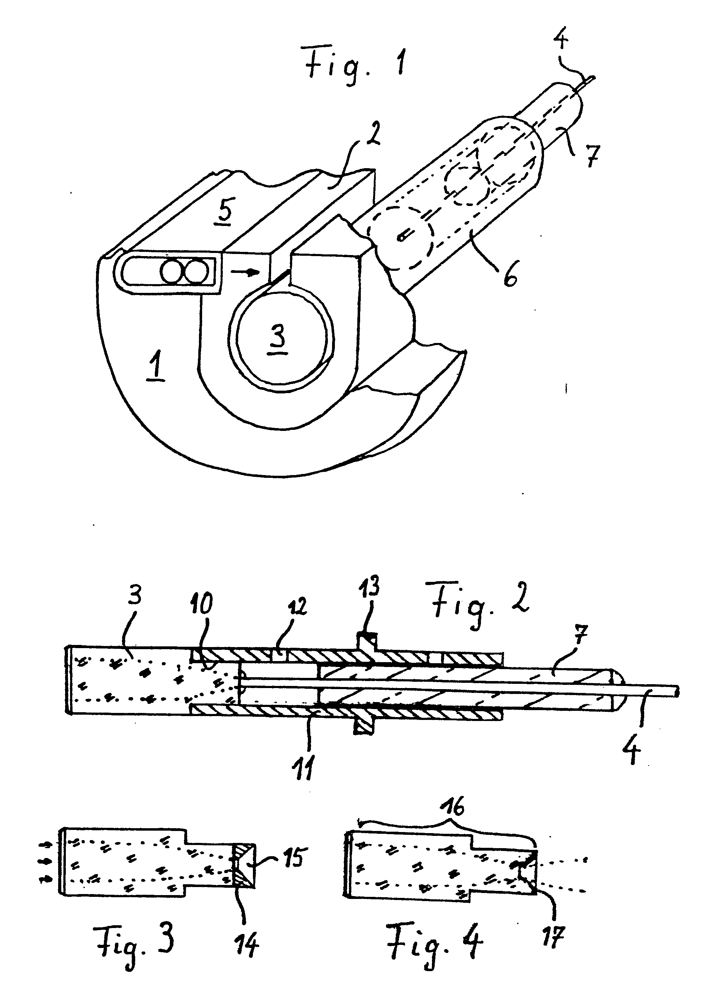

In Figur 1 ist eine Steckerhälfte 1 aufgebrochen gezeichnet, in der sich eine Klemmvorrichtung 2 für die Gradienten-Stablinse 3 befindet, die als Haltemittel eines Lichtwellenleiters 4 dient. Die Klemmvorrichtung 2 ist eine längs-geschlitzte Hülse, deren Innendurchmesser mit Hilfe von Druckmitteln 5 verstellbar verringerbar ist, wodurch der Lichtwellenleiter 4 mit Gradienten-Stablinse 3 festgelegt wird. Eine gut brauchbare mechanische Ausgestaltung der Klemmvorrichtung 2 ist in den Unterlagen des Deutschen Gebrauchsmusters 79 35 570 im einzelnen beschrieben.

Die Gradienten-Stablinse 3 ist mit ihren lichtwellenleiterseitigem Ende in einem Rohr 6 befestigt, in dem der Lichtwellenleiter 4 zentral angeklebt ist. Mit 7 ist die Umhüllung des Lichtwellenleiters bezeichnet.

Mit einer Gradienten-Stablinse 3 mit der Länge ein Viertel der Strahlperiode (1/4 pitch) lassen sich verbesserte optische Übertragungseigenschaften im Übergabegebiet erzielen, weil sich dort das Licht als paralleles Bündel fortpflanzt, so daß ein Abstand zwischen zwei Linsen zulässig ist. Die axiale Ausrichtung der miteinander zu koppelnden Gradienten-Stablinsen 3 ist nicht so kritisch wie bei der Ausrichtung von Lichtwellenleitern.

In Fig. 2 ist für einen Steckverbinder vergleichbarer Bauart ohne Darstellung der Klemmvorrichtung eine andere Version des Aufbaus eines Haltemittels mit einer Gradienten-Stablinse dargestellt, bei der das Rohr 11 über einem Teil 10 der Linse angebracht ist, der einen entsprechend geringen Durchmesser aufweist. Gleiche Teile haben in Fig. 1 und Fig. 2 gleiche Bezugszeichen. Die in Fig. 2 gezeigte Ausführungsform zeigt, daß die Gradienten-Stablinse an der Klebestelle mit dem Lichtwellenleiter 4 plan ist, was den großen Vorteil hat, daß der Lichtwellenleiter gegenüber der Gradienten-Stablinse sehr exakt ausgerichtet werden kann.

Die Reduzierung des Durchmessers am lichtwellenleiterseitigen Ende 10 der Gradienten-Stablinse 3 in Fig. 2 kann beispielsweise durch Schleifen hergestellt werden. Das Rohr 11 als gesondertes Teil kann beispielsweise ein Metallrohr sein. Gradienten-Stablinse 3, Lichtwellenleiter 4 und Rohr 11 werden durch ein durch die Öffnung 12 einbringbares, aushärtendes Mittel vergossen. Das Rohr 11 hat Ansätze 13, die der Befestigung im Stecker dienen.

Die Ansätze 13 haben ferner noch die Aufgabe, in einer Steckerverbindung einen vorgebbaren Abstand zwischen den Stirnflächen der Gradienten-Stablinsen 3 vorzugeben. Dadurch wird eine gegenseitige Beschädigung der freien Stirnflächen vermieden. Schließlich ist auch noch angedeutet, daß die Stirnseiten der Gradienten-Stablinsen mit Schichten belegt sind, um im Stecker Verluste durch Fresnel-Reflexionen zu vermindern.

Mit gepunkteten Linien ist der Strahlenverlauf innerhalb der Gradienten-Stablinse 3 angedeutet, um zu zeigen, in welchem Bereich 10 die Durchmesser-Reduzierung vorgenommen werden kann, ohne die optischen Eigenschaften der Gradienten-Stablinse zu beeinflußen. Der Strahlenverlauf entspricht dem einer Gradienten-Stablinse, die ein Viertel der Strahlperiode der übertragenen Strahlung lang ist (1/4 pitch). Selbstverständlich können auch Gradienten-Stablinsen mit ungeraden Vielfachen der Viertel-Strahlperiode verwendet werden, solange Ausschnitte (10) bevorzugt im Bereich der Knoten angebracht sind.

Eine Verbesserung der Zugfestigkeit der Klebestelle zwischen Lichtwellenleiter 4 und Gradienten-Stablinse 3 nach Fig. 3 erreicht man mit einem zusätzlichen Stück 14, in dessen kegelförmig zulaufenden Lichtwellenleitersitz 15 der Lichtwellenleiter 4 paßt. Das Stück 14 kann mit dem Lichtwellenleiter gemeinsam auf der Gradienten-Stablinse 3 montiert werden. Es kann auch zuerst das Stück 14 montiert werden, wobei von der Stirnseite der Linse parallel eingestrahltes Licht an der für den Lichtwellenleiter 4 vorgesehenen Befestigungsstelle (Knoten) gemessen wird.

In weiterer Ausgestaltung wird eine länger als ein Viertel der Strahlperiode hergestellte Gradienten-Stablinse 16 nach Fig. 4 verwendet, auf der ebenfalls unter stirnseitiger Lichteinstrahlung der kegelförmige Sitz 17 für den Lichtwellenleiter eingeätzt wird.

## Patentansprüche

1. Steckverbindung für Lichtwellenleiter, bei der ein Lichtwellenleiter (4) mit aufgesetzter Gradienten-Stablinse (3) in einem Rohr (11) zentral befestigt ist, wobei Haltemittel vorgesehen sind, um die Stablinse mit einer anderen Stablinse axial ausgerichtet in einem Steckergehäuse (1) zu verbinden, dadurch gekennzeichnet, daß die Gradienten-Stablinse (3) am Lichtaustrittsende einen größeren Durchmesser aufweist als das Rohr (11) und so weit aus diesem hervorragt, daß sie selbst als Haltemittel dient.

2. Steckverbindung nach Anspruch 1, dadurch gekennzeichnet, daß das Rohr (11) über einem Teil (10) der Gradienten-Stablinse (3) angebracht ist, der einen entsprechend geringeren Durchmesser aufweist.

3. Steckverbindung nach Anspruch 1 oder 2, dadurch gekennzeichnet, daß der Lichtwellenleiter (4) innerhalb des Rohres (11) eingegossen ist.

4. Steckverbindung nach einer der vorhergehenden Ansprüche, dadurch gekennzeichnet, daß die Gradienten-Stablinse (3) stirnseitig eine Reflexionen mindernde Schicht hat.

5. Steckverbindung nach einem der vorhergehenden Ansprüche, dadurch gekennzeichnet, daß das Rohr (11) einen Ansatz (13) als Anschlags- und Befestigungsmittel hat.

6. Steckverbindung nach einem der vorhergehenden Ansprüche, dadurch gekennzeichnet, daß ein Teil der Umhüllung (7) des Lichtwellenleiters (4) in dem Rohr (6, 11) eingequetscht ist.

7. Steckverbindung nach Anspruch 1 oder 6, dadurch gekennzeichnet, daß die Umhüllung (7) im Rohr (6, 11) eingeklebt ist.

8. Steckverbindung nach einem der vorhergehenden Ansprüche, dadurch gekennzeichnet, daß auf der Gradienten-Stablinse (3, 16) Stücke (14) mit Einführungsöffnung angebracht sind.

9. Steckverbindung nach Anspruch 8, dadurch gekennzeichnet, daß die Einführungsöffnung (17) in eine verlängerte Gradienten-Stablinse (16) eingeätzt ist.

## Claims

1. A connection for optical fibres in which an optical fibre (4) provided with a GRIN rod lens (3) is coaxially secured in a tube (11), there being provided retaining means for connecting the GRIN rod lens to another GRIN rod lens so as to be axially aligned in a connector housing (1), characterized in that the diameter of the GRIN rod lens (3) at its light exit side is larger than that of the tube (11), the GRIN rod lens projecting therefrom by such an amount that the lens itself acts as a retaining means.

2. A connection as claimed in Claim 1, characterized in that the tube (11) is arranged over a portion (10) of the GRIN rod lens (3) which has a correspondingly smaller diameter.

3. A connection as claimed in Claim 1 or 2, characterized in that the optical fibre (4) is secured in the tube (11) by moulding.

4. A connection as claimed in any one of the preceding Claims, characterized a reflection-reducing layer is provided on the free end face of the GRIN rod lens (3).

5. A connection as claimed in any one of the preceding Claims, characterized in that the tube (11) is provided with a protrusion (13) serving as abutment and fixing means.

6. A connection as claimed in any one of the preceding Claims, characterized in that a portion of the jacket (7) of the optical fibre (4) is secured in the tube (6, 11) by squeezing.

7. A connection as claimed in Claim 1 or 6, characterized in that the jacket (7) is secured in the tube (6, 11) by means of an adhesive.

8. A connection as claimed in any one of the preceding Claims, characterized in that on the GRIN rod lens (3, 16) there is provided a member (14) which includes an alignment hole.

9. A connection as claimed in Claim 8, characterized in that the alignment hole (17) is etched into an extended GRIN rod lens (16).

## Revendications

1. Connecteur pour fibres optiques dans lequel une fibre optique (4) sur laquelle est placée une lentille cylindrique à gradient d'indice (3) est fixée en position centrale dans un tube (11), alors qu'il est prévu des moyens de retenue pour réunir la lentille cylindrique à une autre lentille cylindrique dans un boîtier de connecteur (1) de façon qu'elles soient centrées l'une par rapport à l'autre dans le sens axial, caractérisé en ce que la lentille cylindrique à gradient d'indice (3) présente à son extrémité de sortie de lumière un plus grand diamètre que le tube (11) et dépasse de celui-ci sur une distance telle qu'elle sert elle-même de moyen de retenue.

2. Connecteur selon la revendication 1, caractérisé en ce que le tube (11) est placé sur une partie (10) de lentille (3) ayant un diamètre proportionnellement plus faible.

3. Connecteur selon la revendication 1 ou 2, caractérisé en ce que la fibre optique (4) est scellée dans le tube (11).

4. Connecteur selon l'une quelconque des revendications précédentes, caractérisé en ce que la lentille cylindrique à gradient d'indice (3) présente sur sa face avant une couche de diminution des réflexions.

5. Connecteur selon l'une quelconque des revendications précédentes, caractérisé en ce que le tube (11) présente une saillie (13) servant de butée et de moyen de fixation.

6. Connecteur selon l'une quelconque des revendications précédentes, caractérisé en ce qu'une partie de la gaine (7) de la fibre optique (4) est sertie dans le tube (6, 11).

7. Connecteur selon la revendication 1 ou 6, caractérisé en ce que la gaine (7) est collée dans le tube (6, 11).

8. Connecteur selon l'une quelconque des revendications précédentes, caractérisé en ce que sur la lentille cylindrique à gradient d'indice (3, 16) est placée une pièce (14) présentant une ouverture d'introduction.

9. Connecteur selon la revendication 8, caractérisé en ce que l'ouverture d'introduction (17) est pratiquée par décapage dans une lentille cylindrique prolongée à gradient d'indice (16).

*Fig. 1*

4

2

7

5

6

1

3

*Fig. 2*

3    10    12    13    7

4

11

4

16

15

*Fig. 3*    14    *Fig. 4*    17